# EUROPEAN PATENT APPLICATION

(11) **EP 4 733 826 A1**
(43) Date of publication of application: **29.04.2026**
(21) Application number: 25210307.2
(22) Date of filing: 22.10.2025
(51) Int. Cl.: G02B 26/08, B22F 12/41, B22F 10/28, B22F 12/44, B33Y 50/02, B33Y 30/00, B33Y 10/00, B23K 26/064, B22F 12/49, B29C 64/268, B29C 64/286

(54) **APPARATUS FOR ADDITIVE MANUFACTURING OF THREE-DIMENSIONAL OBJECTS**

(30) Priority: 25.10.2024 US 202418927052
(71) Applicant: General Electric Company, Cincinnati, Ohio 45215 (US)
(72) Inventor: STEELE, William Joseph, West Chester, 45069 (US); THOMPSON, Brian Thomas, West Chester, 45069 (US); ESTES, Robert Edgar, West Chester, 45069 (US)
(74) Representative: Openshaw & Co.

(57) **Abstract**

An apparatus for additively manufacturing three-dimensional objects includes a laser beam source configured to generate a laser beam, and a modulation device disposed downstream from the laser beam source. The modulation device includes a dichroic layer and a modulation layer. The dichroic layer is configured to transmit a first wavelength range of the laser beam and a second wavelength range of the laser beam to the modulation layer and reject wavelengths of the laser beam falling outside the first and second wavelength ranges where the first wavelength range is a multiple of the second wavelength range. One or more optical devices are disposed downstream of the modulation device and configured to selectively scan the laser beam onto a build plane.

## Description

### FIELD

The present disclosure relates to additive manufacturing of three-dimensional objects.

### BACKGROUND

Three-dimensional objects may be additively manufactured using a powder bed fusion process in which an energy or laser beam is directed onto a powder bed to melt and/or sinter sequential layers of powder material. The properties of the three-dimensional object formed by melting and/or fusing the powder material may depend at least in part on one or more characteristics of the energy beam. The laser beam has beam properties defined by one or more laser beam parameter(s) or a beam profile defined by one or more laser beam parameter(s).

### BRIEF DESCRIPTION OF THE DRAWINGS

A full and enabling disclosure of the present disclosure, including the best mode thereof, directed to one of ordinary skill in the art, is set forth in the specification, which makes reference to the appended FIGS., in which:
FIG. 1 is a schematic diagram of an apparatus for additively manufacturing a three-dimensional object in accordance with an exemplary aspect of the present disclosure.
FIG. 2 is a schematic diagram of an exemplary modulation device used in additively manufacturing a three-dimensional object in accordance with an exemplary aspect of the present disclosure.
FIG. 3 is a flow diagram depicting an embodiment of a method of additively manufacturing a three-dimensional object in accordance with various aspects of the present disclosure.
FIG. 4 is a block diagram depicting an example computing system according to exemplary embodiments of the present disclosure.

### DETAILED DESCRIPTION

Reference will now be made in detail to present embodiments of the disclosure, one or more examples of which are illustrated in the accompanying drawings. The detailed description uses numerical and letter designations to refer to features in the drawings. Like or similar designations in the drawings and description have been used to refer to like or similar parts of the disclosure.

The word "exemplary" is used herein to mean "serving as an example, instance, or illustration." Any implementation described herein as "exemplary" is not necessarily to be construed as preferred or advantageous over other implementations. Additionally, unless specifically identified otherwise, all embodiments described herein should be considered exemplary.

As used herein, the terms "first", "second", and "third" may be used interchangeably to distinguish one component from another and are not intended to signify location or importance of the individual components.

The terms "upstream" and "downstream" refer to the relative direction with respect to an energy or laser beam along an optical pathway. For example, "upstream" refers to the direction from which the laser beam originates or emanates, and "downstream" refers to the direction to which the laser beam is propagating.

The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

The phrases "from X to Y" and "between X and Y" each refers to a range of values inclusive of the endpoints (i.e., refers to a range of values that includes both X and Y). Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 1, 2, 4, 10, 15, or 20 percent margin. These approximating margins may apply to a single value, either or both endpoints defining numerical ranges, and/or the margin for ranges between endpoints.

As described herein, the presently disclosed subject matter involves the use of additive manufacturing machines or systems. As used herein, the term "additive manufacturing" refers generally to manufacturing technology in which components are manufactured in a layer-by-layer manner. An exemplary additive manufacturing machine may be configured to utilize any suitable additive manufacturing technology. The additive manufacturing machine may utilize an additive manufacturing technology that includes a powder bed fusion (PBF) technology, such as a direct metal laser melting (DMLM) technology, a selective laser melting (SLM) technology, a directed metal laser sintering (DMLS) technology, or a selective laser sintering (SLS) technology. In an exemplary PBF technology, thin layers of powder material are sequentially applied to a build plane and then selectively melted or fused to one another in a layer-by-layer manner to form one or more three-dimensional objects. Additively manufactured objects are generally monolithic in nature and may have a variety of integral sub-components.

Additionally or alternatively suitable additive manufacturing technologies may include, for example, Fused Deposition Modeling (FDM) technology, Direct Energy Deposition (DED) technology, Laser Engineered Net Shaping (LENS) technology, Laser Net Shape Manufacturing (LNSM) technology, Direct Metal Deposition (DMD) technology, Digital Light Processing (DLP) technology, and other additive manufacturing technologies that utilize an energy beam or other energy source to solidify an additive manufacturing material such as a powder material. In fact, any suitable additive manufacturing modality may be utilized with the presently disclosed the subject matter.

Additive manufacturing technology may generally be described as fabrication of objects by building objects point-by-point, line-by-line, layer-by-layer, typically in a vertical direction. Other methods of fabrication are contemplated and within the scope of the present disclosure. For example, although the discussion herein refers to the addition of material to form successive layers, the presently disclosed subject matter may be practiced with any additive manufacturing technology or other manufacturing technology, including layer-additive processes, layer-subtractive processes, or hybrid processes.

The additive manufacturing processes described herein may be used for forming components using any suitable material. For example, the material may be metal, ceramic, polymer, epoxy, photopolymer resin, plastic, or any other suitable material that may be in solid, powder, sheet material, wire, or any other suitable form, or combinations thereof. Additionally, or in the alternative, exemplary materials may include metals, ceramics, or binders, as well as combinations thereof. Exemplary ceramics may include ultra-high-temperature ceramics, and/or precursors for ultra-high-temperature ceramics, such as polymeric precursors. Each successive layer may be, for example, between about 10 micrometers (µm) and 200 µm, although the thickness may be determined based on any number of parameters and may be any suitable size.

As used herein, the term "build plane" refers to a plane defined by a surface upon which an energy beam impinges to selectively irradiate and thereby consolidate powder material during an additive manufacturing process. Generally, the surface of a powder bed defines the build plane. During irradiation of a respective layer of the powder bed, a previously irradiated portion of the respective layer may define a portion of the build plane. Prior to distributing powder material across a build module, a build plate that supports the powder bed generally defines the build plane.

As used herein, the term "consolidate" or "consolidating" refers to solidification of powder material as a result of irradiating the powder material, including by way of melting, fusing, sintering, or the like.

The present disclosure is directed to an additive manufacturing apparatus using modulation device. A modulation device such as, by way of non-limiting example, a spatial light modulator may be used to control or modulate an intensity, phase, and/or polarization of a laser beam. An exemplary embodiment of a spatial light modulator is a liquid crystal on silicon (LCoS) device. Liquid crystals are birefringent such that applying a voltage to a cell, pixel, or modulation segment of the modulation device causes a change in a refractive index of the modulation segment. The addressable modulation segments may be actuated or controlled to cause the corresponding modulation segment to be placed into one or more different modulation states. As used herein, the term "modulation state" refers to a particular state of the modulation segment caused by a particular voltage application or alignment of molecules of the modulation segment to change the phase, amplitude and/or polarization state of the laser beam incident of the particular modulation segment. It should be understood that other types of spatial light modulators may also be used such as, by way of non-limiting example, a micro-electromechanical systems (MEMS) device.

The inventors of the present disclosure found that laser powder bed melting can be enhanced by using dual wavelengths of a laser beam. By way of non-limiting example, certain metals have a higher absorption of the laser beam energy at the shorter wavelengths until it becomes molten, at which point the longer wavelengths become equal, if not better, for maintaining and increasing the melt pool. The inventors of the present disclosure found that a modulation device can be configured to allow two different and spectrally spaced apart wavelength ranges that are multiples of each other to be phase shifted in such a manner to increase powder bed melting efficiency. In exemplary embodiments, the inventors of the present disclosure have found that a laser beam including more than one wavelength can be directed onto a modulation device such as, by way of non-limiting example, a spatial light modulator utilizing a dichroic layer or filter which is optimized to two or more wavelengths. A dichroic layer or filter includes characteristics to selectively reflect at least a part of light with a particular wavelength or wavelength range and transmit at least a part of light at another particular wavelength or wavelength range. Embodiments of the present disclosure utilize a dichroic layer or filter in a single process to allow at least two different wavelength ranges that are multiples of each other to be transmitted to a modulation device and reject or reflect remaining wavelengths of the laser beam that fall outside the desired wavelength ranges. By way of non-limiting example, wavelength ranges in the approximate areas of 530 nanometers (nm) and 1070 nm may be simultaneously processed and transmitted by the dichroic layer or filter to a modulation portion of the modulation device while other wavelengths are rejected or prevented from reaching the modulation portion of the modulation device (e.g., reflected by the dichroic layer). Thus, by allowing wavelengths of light that are multiples of each other to be modulated by a modulation device, the multiple wavelength ranges are phase shifted by the modulation device to provide a desired phase shift pattern and/or intensity of the laser beam to consolidate the powder build material. By way of non-limiting example, certain types of powder build material are more reactive to the shorter wavelengths of the laser beam 14 such that the shorter wavelengths (e.g., 535 nm) are more readily absorbed by the powder build material and become molten faster before the longer wavelength (e.g., 1070 nm) would have any effect on the powder build material. However, once the powder build material has become molten or changed to a molten state via the shorter wavelength, the longer wavelength is readily absorbed, and the longer wavelength may be less precise or focused because the shorter wavelength has been used to set or define the targeted melt pool.

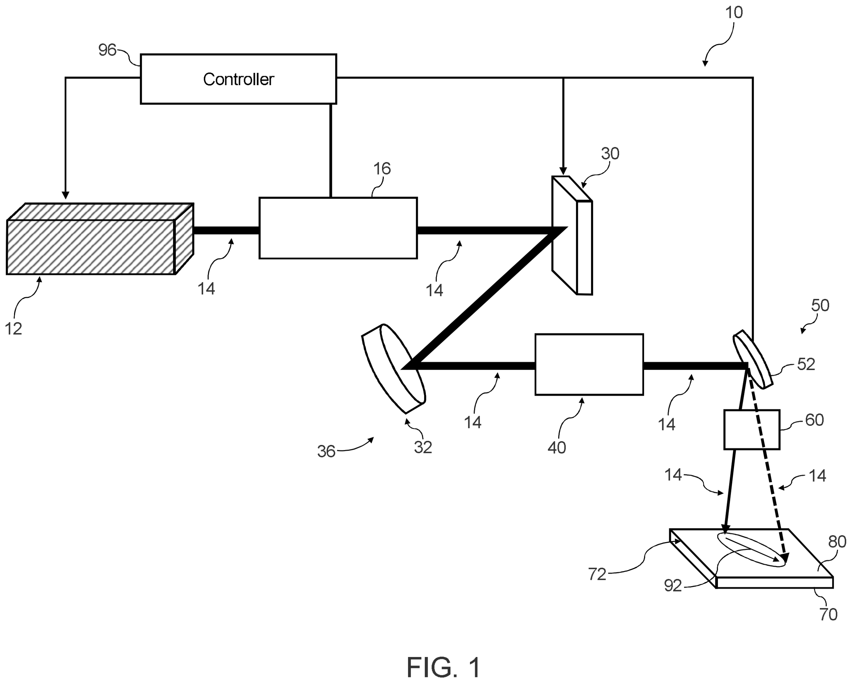

Referring now to FIG. 1, an exemplary embodiment of an apparatus 10 for additively manufacturing three-dimensional objects is illustrated. The apparatus 10 includes several components arranged to effectively generate a laser beam 14 that is manipulated and directed to form a three-dimensional object on a build platform 70. The apparatus 10 may be an additive manufacturing system, an additive manufacturing device, or an additive manufacturing machine.

In exemplary embodiments, one or more laser beam sources 12 are configured to generate the laser beam 14. The one or more laser beam sources 12 can include various types of lasers suitable for additive manufacturing processes such as, by way of non-limiting example, fiber lasers or CO₂ lasers, depending on the specific application requirements.

In exemplary embodiments, a beam shaping device 16 is located downstream from the one or more laser beam sources 12. The beam shaping device 16 is configured to alter the cross-sectional shape, size, and/or profile of the laser beam 14 to suit the needs of the particular additive manufacturing process. The beam shaping device 16 may include one or more optical elements used to collimate the laser beam 14, condition the laser beam 14, transform a profile of the laser beam 14, or convert a shape of the laser beam 14. This alteration can help in optimizing the energy distribution across the beam, thus enhancing the precision and quality of the manufactured object.

Downstream of the beam shaping device 16 are one or more modulation devices 30. In exemplary embodiments, the modulation device 30 is a spatial light modulator such as, by way of non-limiting example, a liquid crystal on silicon (LCoS) device, a digital micromirror device (DMD) or a MEMS device. The modulation device 30 is configured to change the amplitude, phase, and/or polarization of the laser beam 14 or wave front of the laser beam 14. The modulation device 30 is configured to change or modulate at least one laser beam parameter that influences the beam properties of the laser beam 14 emanating from or generated by the laser beam source 12. Therefore, the modulation device 30 is configured to change respective laser beam parameters (e.g., laser beams with (almost) any beam properties) as to place and/or time, including any beam profiles such as, by way of non-limiting example, Gaussian or top hat profiles. By controlling the modulation device 30, the wave front of the laser beam 14 generated by the laser beam source 12 can be changed. Since the wave front significantly determines the beam profile, a changed wave front is typically associated with a changed beam profile of the laser beam 14. A changed wave front or beam profile can also be understood to mean a subdivision of a (single) wave front or a (single) beam profile of the laser beam 14 generated by the laser beam source 12 into several discrete beam profiles or wave fronts. Therefore, a laser beam with a (single) focus area can be generated into several laser beams with one focus area each via the modulation device 30.

Downstream from the modulation device 30 are one or more optical devices 36 configured to direct the laser beam 14 across or onto the build platform 70. In the illustrated embodiment, downstream from the modulation device 30, the laser beam 14 is incident upon a mirror device 32 due to a folded setup or arrangement of the apparatus 10. The mirror device 32 is configured to redirect or reflect the laser beam 14 towards to an optical relay device 40. The optical relay device 40 is disposed downstream of the modulation device 30 and the mirror device 32. The optical relay device 40 is configured to relay or transport the modulated laser beam 14 from the modulation device 30 over a particular distance to a deflection device 50. The optical relay device 40 ensures that the integrity and characteristics of the modulated laser beam 14 are maintained during transmission to the deflection device 50. In exemplary embodiments, the optical relay device 40 may include one or more optical elements such as, by way of non-limiting example, a 4f optical system or lens arrangement.

In the illustrated embodiment, downstream from the optical relay device 40 is the deflection device 50. The deflection device 50 may include, by way of non-limiting example, a galvo scanner device 52. In exemplary embodiments, the galvo scanner device 52 is configured to further direct the laser beam 14 across or onto a build plane 72 such as, by way of non-limiting example, powder build material in the form of a powder bed 80 supported by the build platform 70. It should be understood that the deflection device 50 may, additionally or alternatively, be a gantry system, polygon scanner, or other type of scanning mechanism. In exemplary embodiments, the deflection device 50 may also include a focusing lens assembly 60 having one or more optical elements, such as lenses, mirrors, or the like, configured to focus the laser beam 14 onto the build platform 70. The build platform 70 supports the powder bed 80, which contains the build material in powder form that is to be fused by the laser beam 14. The laser beam 14 may be scanned or directed across the powder bed via a scanning path 92, controlled by the deflection device 50, to ensure that the laser beam 14 follows a predetermined path over the surface of the powder bed 80, dictated by the desired geometry of the object being manufactured. In exemplary embodiments, the deflection device 50 may be in the form of a gantry system configured to move the modulation device 30 with respect to the build platform 70 such that one or more of the optical devices 36 downstream of the modulation device 30 may be omitted.

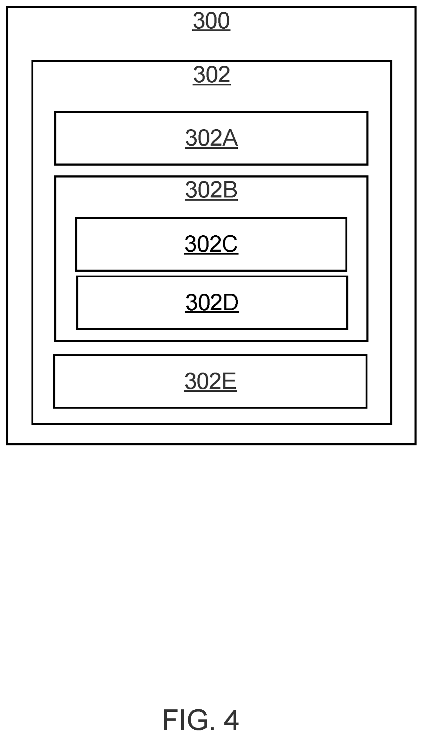

In the illustrated embodiment, one or more controllers 96 are communicatively coupled to the one or more laser beam sources 12, the one or more beam shaping devices 16, the one or more modulation devices 30, and the one or more deflection devices 50. The one or more controllers 96 are configured to generate control signals to selectively control the activation and/or operating parameters of the one or more laser beam sources 12, the conditioning or shaping of the laser beam 14 via the one or more beam shaping devices 16, the modulation state of the one or more modulation devices 30, and the scanning of the laser beam 14 over the powder bed 80 via the deflection device 50. The controller 96 may be configured similar to exemplary computing devices of the computing system 300 described below with reference to FIG. 4.

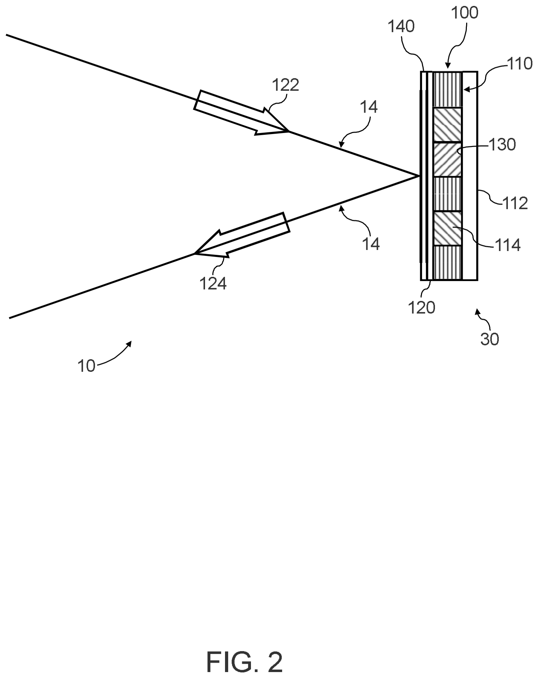

FIG. 2 illustrates a schematic diagram of the modulation 30 shown in FIG. 1. In the illustrated embodiment, the modulation device 30 includes a modulation layer 100 configured to change the at least one laser beam parameter of the laser beam 14. In exemplary embodiments, the modulation layer 100 includes one or more optical modulation elements 110 that are or can be connected to the beam path of the laser beam 14 and are configured or configurable to influence a laser beam parameter that influences the beam properties of at least one beam fraction of the laser beam 14. Depending on the number and arrangement of respective modulation elements 110, it might be that individual, several, or all modulation elements 110 are impinged by a certain beam fraction of the laser beam 14. The beam fraction impinging a respective modulation element 110 can be changed by means of the modulation element 110 regarding its beam properties (e.g., amplitude, phase, and/or polarization) so that, overall, the laser beam 14 with changed beam properties results.

In the illustrated embodiment, the modulation elements 110 are arranged or formed in a housing structure 112 of the modulation device 30 connected to the beam path of the laser beam 14 in which the modulation elements 110 are positioned in a defined spatial arrangement and/or orientation relative to each other. The modulation elements 110 are arranged or formed, especially pixel-like, in one or more rows and/or columns. The modulation elements 110 can be switchable individually or in groups to a modulation state that allows for influencing a laser beam parameter that influences the beam properties of the laser beam 14. The control underlying the switching of the modulation elements 110 can be made via a control device, such as the controller 96 of FIG. 1, associated with the modulation device 30.

In exemplary embodiments, the modulation elements 110 may be liquid crystal elements 114, such as in an LCoS device type of spatial light modulator for separate or cumulative influencing of individual or several laser beam parameters (e.g., amplitude, phase, and/or polarization) of the laser beam 14 via a suitable arrangement, orientation, and switching of respective liquid crystal elements 114. Thus, the laser beam parameter that can be changed via the modulation device 30 and influences the beam properties, especially the beam profile, can be the amplitude, phase, or polarization of the laser beam 14 or the wave front of the laser beam 14. It should be understood that for other types of modulation devices 30 or spatial light modulators, the modulation elements 110 may be mirrors or other types of optical elements depending on the construction or type of the particular spatial light modulator.

In the illustrated embodiment, the modulation device 30 also includes a transparent layer 120 positioned upstream of the modulation layer 100 with respect to an input direction 122 of the laser beam 14 becoming incident on the modulation device 30. The transparent layer 120 enables the transmission of the laser beam 14 into the modulation layer 100 via the input direction 122 and transmission of the laser beam 14 from the modulation layer 100 in an output direction 124. Thus, in the illustrated embodiment, the modulation device 30 is a reflective modulation device 30 having one or more reflective surfaces 130 positioned downstream of the modulation layer 100 with respect to the input direction 122. However, it should be understood that the modulation device 30 may alternatively be configured as a transmissive spatial light modulator.

In exemplary embodiments, the modulation device 30 also includes a dichroic layer 140 configured to transmit two or more distinct and spectrally spaced apart wavelength ranges of the laser beam 14 to the modulation layer 100 and reject or reflect wavelengths of the laser beam 14 falling outside the transmitted wavelength ranges. In other words, the dichroic layer 140 is or functions as a dual band pass filter. In the illustrated embodiment, the dichroic layer 140 is positioned upstream of the transparent layer 120 with respect to the input direction 122. However, it should be understood that the dichroic layer 140 may be positioned between the transparent layer 120 and the modulation layer 100. It should also be understood that the transparent layer 120 and the dichroic layer 140 may be formed as a single unitary element or layer, or the transparent layer 120 may be optional as the dichroic layer 140 enables suitable transmittance of the laser beam 14 into and out of the modulation layer 100 in the desired wavelength ranges. In exemplary embodiments, the dichroic layer 140 is formed as part of the modulation device 30. However, it should be understood that the dichroic layer 140 may be part of a separate optical component such as, by way of non-limiting example, a dichroic filter located upstream of the modulation device 30.

In exemplary embodiments, the dichroic layer 140 enables two or more different wavelength ranges to be phase shifted. In exemplary embodiments, the two or more wavelength ranges are multiples of each other. In other words, at least one of the two or more different wavelength ranges is a multiple of another one of the two or more different wavelength ranges. By way of non-limiting example, one commonly used wavelength used in additive manufacturing is 535 nanometers (nm). In exemplary embodiments, the dichroic layer 140 may be configured to allow a wavelength range including the 535 nm wavelength (e.g., 535 nm +/- 10 nm) and allow the spectrally spaced apart wavelength range including 1070 nm wavelength (e.g., 1070 nm +/- 10 nm) of the laser beam 14 to be transmitted to the modulation layer 100 while rejecting wavelengths outside the 535 nm and 1070 nm wavelength ranges. In this embodiment, the allowed wavelength ranges provided by the dichroic layer 140 are a multiple of two to each other. Thus, in exemplary embodiments, the wavelength ranges allowed by the dichroic layer 140 are spectrally spaced apart from each other along the wavelength spectrum such that the allowed wavelength ranges are a multiple of each other where the multiple is a whole number or integer. However, it should be understood that the dichroic layer 140 may be otherwise configured to allow other wavelength ranges to be passed to the modulation layer 100. Another exemplary embodiment of the dichroic layer 140 may allow a first wavelength range from about 530 nanometers (nm) to about 539 nm and allow a second wavelength range from about 1060 nm to about 1078 nm.

Thus, by allowing two different and spectrally spaced apart wavelength ranges of the laser beam 14 to be modulated by the modulation device 30, each of the allowed wavelength ranges of the laser beam 14 can be directed to the powder bed 80 to consolidate the powder build material. By way of non-limiting example, certain types of powder build material are more reactive to the shorter wavelengths of the laser beam 14 such that the shorter wavelengths (e.g., 535 nm) are more readily absorbed by the powder build material and become molten faster before the longer wavelength (e.g., 1070 nm) would have any effect on the powder build material. However, once the powder build material has become molten or changed to a molten state via the shorter wavelength, the longer wavelength is readily absorbed, and the longer wavelength may be less precise or focused because the shorter wavelength has been used to set or define the targeted melt pool.

In an exemplary liquid crystal embodiment of the modulation device 30, the modulation layer 100 may include one or more of the liquid crystal elements 114 that are reactive, or refractively responsive (e.g., changing the refractive index), to the two or more wavelength ranges allowed by the dichroic layer 140. In exemplary embodiments, a single type of liquid crystal element 114 may be reactive, or refractively responsive, to the two or more wavelength ranges allowed by the dichroic layer 140. However, it should be understood that the modulation layer 100 may, additionally or alternatively, have different or separate liquid crystal elements 114 that are reactive, or refractively responsive, to at least one of the two or more wavelength ranges. By way of non-limiting example, the modulation layer 100 may include a first type of liquid crystal element 114 that is reactive, or refractively responsive, to the 535 nm wavelength range of the laser beam 14 and a second type of liquid crystal element 114 that is reactive, or refractively responsive, to the 1070 nm wavelength range of the laser beam 14.

In exemplary embodiments, the controller 96 is configured to compute or calculate Fourier fields for the wavelength ranges of the laser beam 14 allowed or transmitted by the dichroic layer 140 to modulate the laser beam via the modulation device 30. In other words, the controller 96 is configured to compute or calculate Fourier fields for the wavelength ranges of the laser beam 14 allowed or transmitted by the dichroic layer 140 to phase shift the corresponding wavelength ranges to obtain a desired phase pattern of the laser beam 14 on the target build plane. Thus, in exemplary embodiments, the controller 96 calculates the Fourier fields for the two or more wavelength ranges of the laser beam 14 transmitted by the dichroic layer 140 to the modulation layer 100 and controls the modulation layer 100 based on such Fourier calculations to modulate the laser beam 14 to provide a desired phase or wave front pattern or intensity used to consolidate the powder build material.

In operation, the one or more laser beam sources 12 generates the laser beam 14 which is directed downstream to the one or more beam shaping devices 16. The generation of the laser beam 14 and the conditioning and/or shaping of the laser beam 14 by the respective one or more laser beam sources 12 and the one or more beam shaping devices 16 may be controlled by the one or more controllers 96 pursuant to one or more sets of predefined parameters. The laser beam 14 travels downstream to the one or more modulation devices 30 where the one or more modulation devices 30 modulate the laser beam 14 having a desired intensity, phase, and/or polarization based on the one or more sets of predefined parameters. The laser beam 14 is incident on the one or more modulation devices 30 such that the dichroic layer 140 of the respective modulation device 30 filters the laser beam 14 to pass or transmit select wavelength ranges of the laser beam 14 to the modulation layer 100 of the modulation device 30. The controller 96 is configured to compute or calculate Fourier fields for the wavelength ranges of the laser beam 14 transmitted by the dichroic layer 140 to control the modulation device 30 and phase shift the transmitted wavelengths to a desired phase or wave front pattern or intensity. The modulated laser beam 14 travels downstream from the modulation device 30 toward a target build plane and is directed onto the powder bed 80 via the one or more deflection devices 50.

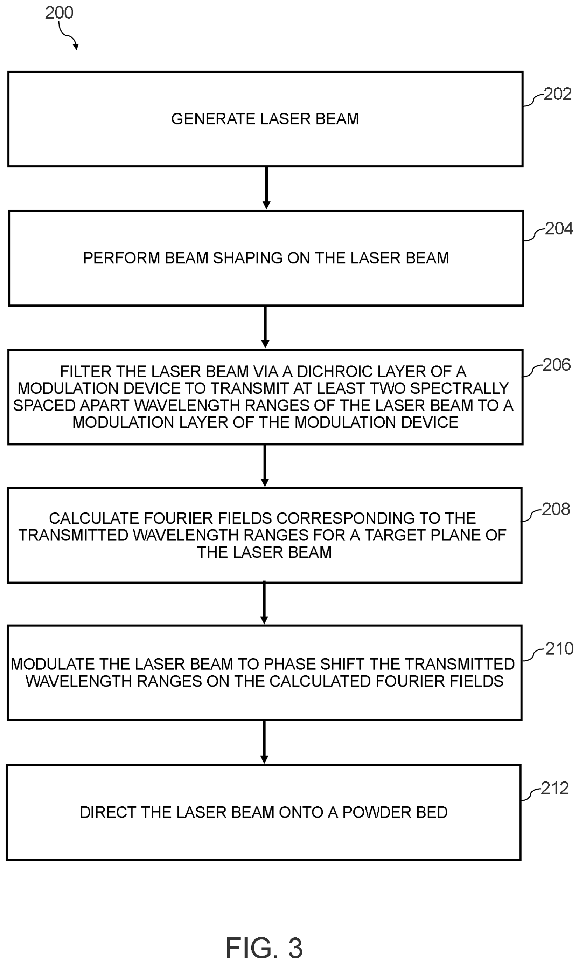

Referring now to FIG. 3, a flow diagram is presented depicting an exemplary embodiment of a method 200 for additively manufacturing three-dimensional objects in accordance with various aspects of the present disclosure. The method 200 illustrates a series of steps designed to control the characteristics of a laser beam in a manner that optimizes the additive manufacturing process, thereby enhancing the quality and precision of the manufactured objects.

The initial step 202 of the method 200 involves generating the laser beam 14. This step is performed by the one or more laser beam sources 12, which is configured to produce a coherent beam of light suitable for processing materials in an additive manufacturing environment. Following the generation of the laser beam 14, the method 200 proceeds to step 204, where the laser beam is conditioned and/or shaped by one or more beam shaping devices 16. At step 206, the method 200 includes filtering the laser beam 14 via the dichroic layer 140 of the modulation device 30 to transmit at least two spectrally spaced apart wavelength ranges of the laser beam 14 to the modulation layer 100 of the modulation device 30. At step 208, the method 200 includes calculating Fourier fields corresponding to the transmitted wavelength ranges of the laser beam 14 by the dichroic layer 140 for a desired phase pattern or intensity of the laser beam 14 on a target plane. At step 210, the method 200 includes controlling or modulating the laser beam 14 corresponding to the calculated Fourier fields via the modulation layer 100 of the modulation device 30. At step 212, the method 200 includes directing the laser beam 14 onto the powder bed 80.

FIG. 4 provides an example computing system 300 according to example embodiments of the present disclosure. The computing devices or elements described herein, such as the controller 96 (FIG. 1), may include various components and perform various functions of the computing system 300 described below, for example.

As shown in FIG. 4, the computing system 300 can include one or more computing device(s) 302. The computing device(s) 302 can include one or more processor(s) 302A and one or more memory device(s) 302B. The one or more processor(s) 302A can include any suitable processing device, such as a microprocessor, microcontroller, integrated circuit, logic device, and/or other suitable processing device. The one or more memory device(s) 302B can include one or more computer-executable or computer-readable media, including, but not limited to, non-transitory computer-readable media, RAM, ROM, hard drives, flash drives, and/or other memory devices.

The one or more memory device(s) 302B can store information accessible by the one or more processor(s) 302A, including computer-readable instructions 302C that can be executed by the one or more processor(s) 302A. The computer-readable instructions 302C can be any set of instructions that when executed by the one or more processor(s) 302A, cause the one or more processor(s) 302A to perform operations. In some embodiments, the computer-readable instructions 302C can be executed by the one or more processor(s) 302A to cause the one or more processor(s) 302A to perform operations, such as any of the operations and functions for which the computing system 300 and/or the computing device(s) 302 are configured, such as generating the laser beam 14, conditioning and/or shaping the laser beam 14, calculating Fourier fields for the two or more wavelength ranges of the laser beam 14 allowed or transmitted by the dichroic layer 140, controlling the modulation states of the modulation devices 30 based on the calculated Fourier fields, and scanning and/or steering the laser beam 14 over the powder bed 80 by the deflection device 50. The computer-readable instructions 302C can be software written in any suitable programming language or can be implemented in hardware. Additionally, and/or alternatively, the computer-readable instructions 302C can be executed in logically and/or virtually separate threads on processor(s) 302A. The memory device(s) 302B can further store data 302D that can be accessed by the processor(s) 302A. For example, the data 302D can include models, lookup tables, databases, etc.

The computing device(s) 302 can also include a network interface 302E used to communicate, for example, with the other components of the computing system 300 (e.g., via a communication network). The network interface 302E can include any suitable components for interfacing with one or more network(s), including for example, transmitters, receivers, ports, controllers, antennas, and/or other suitable components. One or more devices can be configured to receive one or more commands from the computing device(s) 302 or provide one or more commands to the computing device(s) 302.

Thus, in exemplary embodiments, the apparatus includes a modulation device configured to allow two different and spectrally spaced apart wavelength ranges that are multiples of each other to be phase shifted in such a manner to increase powder bed melting efficiency. In exemplary embodiments, a laser beam including more than one wavelength can be directed onto a modulation device utilizing a dichroic layer or filter which is optimized to two or more wavelengths or wavelength ranges. Embodiments of the present disclosure utilize a dichroic layer or filter in a single process to allow at least two different wavelength ranges that are multiples of each other to be transmitted to a modulation device and reject remaining wavelengths of the laser beam that fall outside the desired wavelength ranges. Thus, by allowing wavelengths of light that are multiples of each other to be modulated by a modulation device, the multiple wavelength ranges are phase shifted by the modulation device to provide a desired phase shift pattern and/or intensity of the laser beam to consolidate the powder build material. Because certain types of powder build material are more reactive to the shorter wavelengths of the laser beam, the shorter wavelengths are more readily absorbed by the powder build material and become molten faster before the longer wavelength would have any effect on the powder build material. However, once the powder build material has become molten or changed to a molten state via the shorter wavelength, the longer wavelength is readily absorbed, and the longer wavelength may be less precise or focused because the shorter wavelength has been used to set or define the targeted melt pool.

This written description uses examples to disclose the present disclosure, including the best mode, and also to enable any person skilled in the art to practice the disclosure, including making and using any devices or systems and performing any incorporated methods. The patentable scope of the disclosure is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Further aspects are provided by the subject matter of the following clauses:

An apparatus for additively manufacturing three-dimensional objects, the apparatus comprising: a laser beam source configured to generate a laser beam; a modulation device disposed downstream from the laser beam source, wherein the modulation device comprises: a dichroic layer; and a modulation layer, wherein the dichroic layer is configured to transmit a first wavelength range of the laser beam and a second wavelength range of the laser beam to the modulation layer and reject wavelengths of the laser beam falling outside the first and second wavelength ranges, and wherein the first wavelength range is a multiple of the second wavelength range; and one or more optical devices disposed downstream of the modulation device and configured to selectively scan the laser beam onto a build plane.

The apparatus of the previous clause, wherein the dichroic layer comprises a dual band pass filter.

The apparatus of any previous clause, wherein the modulation device further comprises a transparent layer, and wherein the laser beam passes through the transparent layer in an input direction to enter the modulation layer.

The apparatus of any previous clause, wherein the dichroic layer is disposed upstream of the transparent layer with respect to the input direction.

The apparatus of any previous clause, wherein the modulation device comprises at least one of a liquid on silicon (LCoS) device or a micro-electromechanical systems (MEMS) device.

The apparatus of any previous clause, further comprising a controller communicatively coupled to the modulation device and configured to control the modulation layer at the first and second wavelength ranges.

The apparatus of any previous clause, wherein the controller is configured to compute Fourier fields at the first and second wavelength ranges.

The apparatus of any previous clause, wherein the first wavelength range is a multiple of two of the second wavelength range.

The apparatus of any previous clause, wherein the modulation device comprises a LCoS device, and wherein the modulation layer comprises one or more types of liquid crystal elements reactive to the first and second wavelength ranges.

The apparatus of any previous clause, wherein the one or more types of liquid crystal elements comprises a first liquid crystal element reactive to the first wavelength range and a second liquid crystal element different than the first liquid crystal element and reactive to the second wavelength range.

The apparatus of any previous clause, wherein the first wavelength range is from about 530 nanometers (nm) to about 539 nm.

The apparatus of any previous clause, wherein the second wavelength range is from about 1060 nm to about 1078 nm.

A method for additively manufacturing three-dimensional objects, the method comprising: generating a laser beam with a laser beam source; modulating the laser beam via a modulation device to change at least one laser beam parameter of the laser beam, wherein the modulation device includes a dichroic layer configured to transmit a first wavelength range of the laser beam and a second wavelength range of the laser beam to a modulation layer of the modulation device and reject wavelengths of the laser beam falling outside the first and second wavelength ranges, and wherein the first wavelength range is a multiple of the second wavelength range; and directing the laser beam onto a build plane.

The method of any previous clause, further comprising computing, via a controller, Fourier fields at the first and second wavelength ranges.

The method of any previous clause, further comprising controlling, via the controller, the modulation device based on the computed Fourier fields.

The method of any previous clause, wherein the first wavelength range is a multiple of two of the second wavelength range, and further comprising computing, via a controller, Fourier fields at the first and second wavelength ranges.

The method of any previous clause, wherein directing the laser beam onto the build plane comprises directing the laser beam having the first wavelength range and the second wavelength range onto a powder bed.

A non-transitory computer-readable medium comprising computer-executable instructions, which, when executed by a processor associated with an additive manufacturing machine, cause the processor to perform a method comprising: generating a laser beam with a laser beam source; modulating the laser beam via a modulation device to change at least one laser beam parameter of the laser beam, wherein the modulation device includes a dichroic layer configured to transmit a first wavelength range of the laser beam and a second wavelength range of the laser beam to a modulation layer of the modulation device and reject wavelengths of the laser beam falling outside the first and second wavelength ranges, and wherein the first wavelength range is a multiple of the second wavelength range; and directing the laser beam onto a build plane.

The non-transitory computer-readable medium of any previous clause, wherein the computer-executable instructions, which when executed by the processor, causes the processor to perform the method comprising: computing Fourier fields at the first and second wavelength ranges.

The non-transitory computer-readable medium of any previous clause, wherein the computer-executable instructions, which when executed by the processor, causes the processor to perform the method comprising: controlling the modulation device based on the computed Fourier fields.

An apparatus for additively manufacturing three-dimensional objects, the apparatus comprising: a laser beam source configured to generate a laser beam; a modulation device disposed downstream from the laser beam source and configured to change at least one laser beam parameter of the laser beam; a dichroic filter positioned upstream of the modulation device, the dichroic filter configured to transmit a first wavelength range of the laser beam and a second wavelength range of the laser beam to the modulation device reflect wavelengths of the laser beam falling outside the first and second wavelength ranges, and wherein the first wavelength range is a multiple of the second wavelength range; and one or more optical devices disposed downstream of the modulation device and configured to selectively scan the laser beam onto a build plane.

## Claims

1. An apparatus for additively manufacturing three-dimensional objects, the apparatus comprising:
a laser beam source configured to generate a laser beam;
a modulation device disposed downstream from the laser beam source,
wherein the modulation device comprises:
a dichroic layer; and
a modulation layer, and wherein the dichroic layer is configured to transmit a first wavelength range of the laser beam and a second wavelength range of the laser beam to the modulation layer and reject wavelengths of the laser beam falling outside the first and second wavelength ranges, and wherein the first wavelength range is a multiple of the second wavelength range; and
one or more optical devices disposed downstream of the modulation device and configured to selectively scan the laser beam onto a build plane.

2. The apparatus of claim 1, wherein the dichroic layer comprises a dual band pass filter.

3. The apparatus of any one of the preceding claims, wherein the modulation device further comprises a transparent layer, and wherein the laser beam passes through the transparent layer in an input direction to enter the modulation layer, wherein optionally the dichroic layer is disposed upstream of the transparent layer with respect to the input direction.

4. The apparatus of any one of the preceding claims, wherein the modulation device comprises at least one of a liquid on silicon (LCoS) device or a micro-electromechanical systems (MEMS) device.

5. The apparatus of any one of the preceding claims, further comprising a controller communicatively coupled to the modulation device and configured to control the modulation layer at the first and second wavelength ranges, wherein optionally the controller is configured to compute Fourier fields at the first and second wavelength ranges.

6. The apparatus of any one of the preceding claims, wherein the first wavelength range is a multiple of two of the second wavelength range.

7. The apparatus of any one of the preceding claims, wherein the modulation device comprises a LCoS device, and wherein the modulation layer comprises one or more types of liquid crystal elements reactive to the first and second wavelength ranges, wherein optionally the one or more types of liquid crystal elements comprises a first liquid crystal element reactive to the first wavelength range and a second liquid crystal element different than the first liquid crystal element and reactive to the second wavelength range.

8. The apparatus of any one of the preceding claims, wherein the first wavelength range is from about 530 nanometers (nm) to about 539 nm, wherein optionally the second wavelength range is from about 1060 nm to about 1078 nm.

9. A method for additively manufacturing three-dimensional objects, the method comprising:
generating a laser beam with a laser beam source;
modulating the laser beam via a modulation device to change at least one laser beam parameter of the laser beam, wherein the modulation device includes a dichroic layer configured to transmit a first wavelength range of the laser beam and a second wavelength range of the laser beam to a modulation layer of the modulation device and reject wavelengths of the laser beam falling outside the first and second wavelength ranges, and wherein the first wavelength range is a multiple of the second wavelength range; and
directing the laser beam onto a build plane.

10. The method of claim 9, further comprising computing, via a controller, Fourier fields at the first and second wavelength ranges, wherein optionally the method further comprises controlling, via the controller, the modulation device based on the computed Fourier fields.

11. The method of any one of claims 9-10, wherein the first wavelength range is a multiple of two of the second wavelength range, and further comprising computing, via a controller, Fourier fields at the first and second wavelength ranges.

12. The method of any one of claims 9-11, wherein directing the laser beam onto the build plane comprises directing the laser beam having the first wavelength range and the second wavelength range onto a powder bed.

13. A non-transitory computer-readable medium comprising computer-executable instructions, which, when executed by a processor associated with an additive manufacturing machine, cause the processor to perform a method comprising:
generating a laser beam with a laser beam source;
modulating the laser beam via a modulation device to change at least one laser beam parameter of the laser beam, wherein the modulation device includes a dichroic layer configured to transmit a first wavelength range of the laser beam and a second wavelength range of the laser beam to a modulation layer of the modulation device and reject wavelengths of the laser beam falling outside the first and second wavelength ranges, and wherein the first wavelength range is a multiple of the second wavelength range; and
directing the laser beam onto a build plane.

14. The non-transitory computer-readable medium of claim 13, wherein the computer-executable instructions, which when executed by the processor, causes the processor to perform the method comprising computing Fourier fields at the first and second wavelength ranges;
wherein optionally the computer-executable instructions, which when executed by the processor, causes the processor to perform the method comprising controlling the modulation device based on the computed Fourier fields.

15. A computer program comprising computer-executable instructions which when executed by a processor causes the processor to perform the method of any one of claims 9-12.
